(19) Europäisches Patentamt

European Patent Office

Office européen des brevets

(11) **EP 0 995 952 A2**

(12) **EUROPÄISCHE PATENTANMELDUNG**

(43) Veröffentlichungstag:
26.04.2000 Patentblatt 2000/17

(51) Int. Cl.⁷: **F24C 15/34**, C04B 28/00

(21) Anmeldenummer: **99120168.2**

(22) Anmeldetag: **08.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.10.1998 DE 19848874**

(71) Anmelder:
**BSH Bosch und Siemens Hausgeräte GmbH
81669 München (DE)**

(72) Erfinder:
• **Reiff, Udo
  75438 Knittlingen (DE)**
• **Begero, Rudolf
  75015 Bretten (DE)**
• **Rolli, Alois-Paul
  68753 Waghäusel (DE)**
• **Peisser, Ludwig
  76703 Kraichtal (DE)**
• **Lange, Manfred
  75015 Bretten-Ruit (DE)**

(54) **Backofen**

(57) Backofen mit einer Muffel (1) und einer Muffel-Tür (2) sowie einer Wärmeisolationsschicht (3, 15) zur Wärmedämmung der Muffel. Auf die Wärmeisolationsschicht (3, 15) ist ein ihre Fasern bindendes anorganisches Material aufgebracht, vorzugsweise aufgesprüht.

Fig.1

**Beschreibung**

Die Erfindung betrifft einen Backofen gemäß dem Oberbegriff von Anspruch 1.

Ein Backofen dieser Art ist aus der DE-A-26 15 604 bekannt. Die Muffel dieses Backofens ist in eine Wärmeisolationsschicht eingekleidet, die aus Steinwolle besteht. Die Isolationsschicht kann beispielsweise durch Spannbänder an den Außenflächen der Muffel gehalten werden. Zwischen der Wärmeisolationsschicht und einem Außengehäuse des Backofens befindet sich ein mehr oder weniger großer Zwischenraum, welcher durch Öffnungen im Außengehäuse belüftet ist. Von der Wärmeisolationsschicht, welche aus miteinander verklebten Fasern besteht, können sich Fasern und Faserteile ablösen, welche durch die Belüftungsöffnungen in die Umgebung, insbesondere eine Küche, oder am Herstellungsort des Herdes in einen Arbeitsraum gelangen können und dann die Gesundheit von Personen gefährden. Diese frei gewordenen Fasern oder Faserteile können von Personen eingeatmet werden und setzen sich dann in deren Atemwege fest.

Wärmeisolationsschichten dieser Art können aus beliebigen Mineralfasern oder Keramikfasern und einem die Fasern miteinander verbindenden Bindemittel bestehen. Das Bindemittel kann jedoch nicht verhindern, daß an der Oberfläche der Wärmeisolationsschicht einzelne Fasern oder Faserteile sich ablösen.

Auf einem anderen Gebiet, nämlich bei der Verwendung von Asbest in Gebäuden, ist es bekannt, Asbestplatten mit einem Penetrationsmittel zu behandeln, durch welches die „Restfasern" gebunden werden. Diese Penetrationsmittel sind Kunstharzdispersionen. Kunstharzdispersionen oder andere organische Verbindungen können jedoch in Backöfen als Restfaserbindemittel nicht verwendet werden wegen der dort entstehenden hohen Temperaturen.

Durch die Erfindung soll die Aufgabe gelöst werden, bei Backöfen bereits an ihrem Herstellungsort das Freiwerden von nicht gebundenen Fasern der Wärmeisolationsschicht zu vermeiden, mit welcher Backofenmuffel an ihrer Außenseite und/oder Backofen-Türen isoliert werden.

Diese Aufgabe wird gemäß der Erfindung durch die kennzeichnenden Merkmale von Anspruch 1 gelöst.

Gemäß der Erfindung wird auf die Wärmeisolationsschicht, bevor oder nachdem sie um die Muffel eines Backofens herum angeordnet und befestigt wurde und/oder an einer Backofentür angebracht wurde, ein anorganisches Material aufgebracht, durch welches an der Oberfläche der Wärmeisolationsschicht befindliche Fasern untereinander und mit dem festen Teil der Wärmeisolationsschicht verbunden werden. Vorzugsweise wird das anorganische Mittel auf die Wärmeisolationsschicht aufgesprüht. Damit wird bereits am Herstellort des Backofens eine Gesundheitsgefährdung durch in der Atmosphäre herumschwebende oder von Luftströmen mitgenommene Fasern und Faserteile verhindert.

Das anorganische Material muß so beschaffen sein, daß es auch bei hohen Temperaturwechseln von über 100 Grad Celsius hitzebeständig und alterungsbeständig ist. Nur dann ist gewährleistet, daß während einer langen Lebensdauer eines Backofens in einem Backraum oder in einer Küche keine Fasern oder Faserteile von der Wärmeisolationsschicht abgelöst werden und in die umgebende Atmosphäre gelangen können.

Gemäß der Erfindung wird als anorganisches Material zur Restfaserbindung eine anorganische Dispersion, insbesondere ein wasserlösliches Alkalisilikat, beispielsweise Natronwasserglas, vorgeschlagen.

Besonders geeignet, insbesondere für Wärmeisolationsschichten aus Keramikfasern, ist Natronwasserglas. Hierbei ergibt sich folgende chemische Formel:

$$SiO_2 + Na_2CO_3 \rightarrow Na_2SiO_3 + CO_2$$

wobei $Na_2SiO_3$ Natronwasserglas ist.

Ein anderes anorganisches Material, welches je nach Art der Fasern der Wärmeisolationsschicht verwendet werden kann, ist Kaliumwasserglas.

Die Erfindung wird im folgenden mit Bezug auf die Zeichnungen anhand einer bevorzugten Ausführungsform als Beispiel beschrieben. In den Zeichnungen zeigen

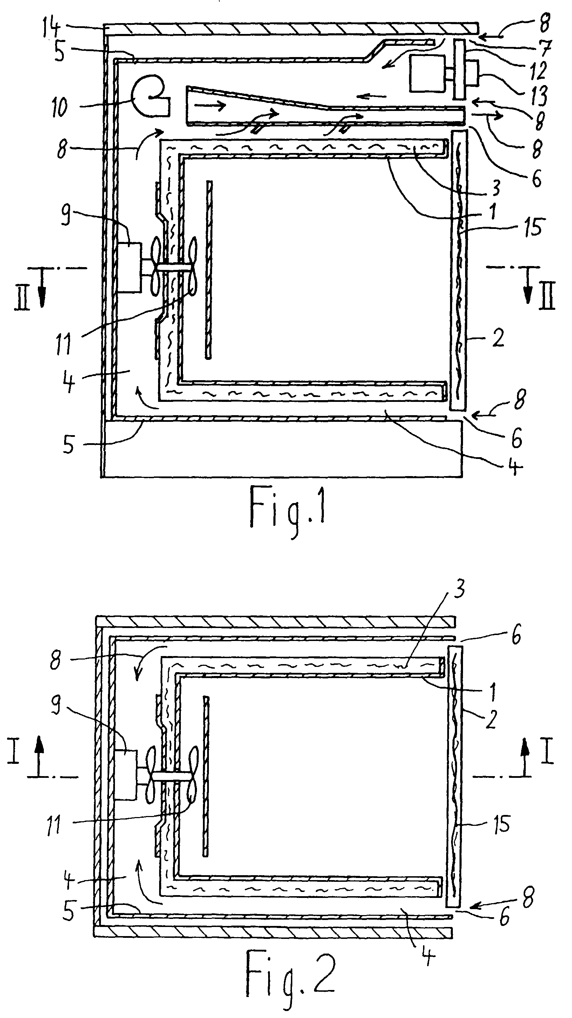

Fig. 1 schematisch einen Vertikalschnitt durch einen Backofen nach der Erfindung,

Fig. 2 einen Horizontalschnitt durch den Backofen von Fig. 1.

Die Zeichnungen zeigen die Muffel 1 eines Elektro-Einbaubackofens. Die Beschickungsöffnung der Muffel 1 ist durch eine Tür 2 verschließbar. Die gesamte Außenfläche der Muffel 1 ist mit einer im wesentlichen aus Fasern bestehenden Wärmeisolationsschicht 3 umgeben, welche z.B. aus Mineralfasern, insbesondere Steinwolle, oder Keramikfasern oder einer Mischung davon besteht. In den Zwischenräumen 4 zwischen der Wärmeisolationsschicht 3 und benachbarten Gehäuseteilen 5 kann Luft durch Öffnungen 6 und 7 in der Frontseite des Herdes zirkulieren, wie dies durch Pfeile 8 schematisch dargestellt ist.

In dem Zwischenraum 4 kann sich ein Gebläse 9 befinden. Gemäß einer besonderen Ausführungsform kann auch ein zweites Gebläse 10 vorgesehen sein.

In der Muffel 1 kann in bekannter Weise ebenfalls ein Gebläse oder ein von dem erstgenannten Gebläse 9 angetriebenes Gebläserad 11 angeordnet sein. Oberhalb der Tür 2 befinden sich in einer Bedienblende 12 Bedienelemente 13 zur manuellen Bedienung des Einbauherdes. Den oberen Abschluß des Einbauherdes kann eine Arbeitsplatte oder eine Kochmulde 14 bilden.

Die Tür 2 kann ebenfalls mit einer Wärmeisolationsschicht 15 aus dem gleichen Material wie die Wärmeisolationsschicht 3 der Muffel 1 oder aus einem anderen Material versehen sein.

Gemäß der Erfindung wird zumindest die nicht an einer Gerätefläche bzw. der Muffel 1 anliegende Oberfläche der Wärmeisolationsschicht 3 und/oder 15 mit einer anorganischen Dispersion besprüht, welches an der Oberfläche der Wärmeisolationsschicht gelegene Fasern und Faserteilchen verbindet und damit verhindert, daß diese in die umgebende Atmosphäre gelangen und dort zu einer Gesundheitsgefährdung für Personen werden können, sowohl am Herstellort des Backofens als auch bei seinem späteren Gebrauch in einem Backraum oder einer Küche.

Das Wärmeisolationsmaterial kann aus Mineralfasern oder Keramikfasern oder einer Mischung bestehen, beispielsweise aus Steinwolle. Das darauf aufgesprühte anorganische Dispersionsmaterial ist vorzugsweise ein wasserlösliches Alkalisilikat, vorzugsweise Natronwasserglas.

Die Erfindung hat folgende Vorteile:
Eine Minimierung der Freisetzung von Fasern soweit, daß keine freigesetzten Fasern mehr nachweisbar sind. Die Applikation der anorganischen Dispersion durch Aufsprühen auf die Wärmeisolationsschicht ist ein einfaches und preiswertes Verfahren. Durch das Sprühen des anorganischen Materials gelangt dieses auch in jegliche Vertiefungen der Wärmeisolationsschichten 3 und 15. Am Herstellort des Herdes (Elektro- oder Gasherd) werden die Arbeitsbedingungen durch die reduzierte Umweltbelastung und reduzierte Gesundheitsbelastung verbessert, ebenso bei der späteren Verwendung des Backofens in einem Backraum oder in einer Küche. Außerdem wird die Hygiene wesentlich verbessert, da die Erfindung auch eine Kontaminierung von Speisen durch freigesetzte Fasern oder Faserpartikel verhindert.

**Patentansprüche**

1.    Backofen mit einer Muffel (1), einer Tür (2) zum Verschließen einer Beschickungsöffnung der Muffel, und mit einer Wärmeisolationsschicht zur Wärmedämmung der Muffel, **dadurch gekennzeichnet,** daß auf die Wärmeisolationsschicht (3, 15) ein ihre Fasern bindendes anorganisches Material aufgebracht ist.

2.    Backofen nach Anspruch 1, **dadurch gekennzeichnet,** daß das anorganische Material eine anorganische Dispersion ist.

3.    Backofen nach Anspruch 2, **dadurch gekennzeichnet,** daß das anorganische Material ein wasserlösliches Alkalisilikat ist.

4.    Backofen nach Anspruch 3, **dadurch gekennzeichnet,** daß das Alkalisilikat Natronwasserglas ist.

5.    Backofen nach einem der vorhergehenden Ansprüche, **dadurch gekennzeichnet,** daß die Wärmeisolationsschicht Mineralfasern enthält.

6.    Backofen nach einem der vorhergehenden Ansprüche, **dadurch gekennzeichnet,** daß die Wärmeisolationsschicht Keramikfasern enthält.

7.    Backofen nach einem der vorhergehenden Ansprüche, **dadurch gekennzeichnet,** daß die Wärmeisolationsschicht um die Muffel herum angeordnet ist und das die Fasern bindende Material nur auf die von der Muffel abgewandte Außenseite der Wärmeisolationsschicht aufgebracht ist.

8.    Backofen nach einem der vorhergehenden Ansprüche, **dadurch gekennzeichnet,** daß die Wärmeisolationsschicht (15) an der Tür zu ihrer Wärmeisolierung angebracht ist.

9.    Verfahren zur Behandlung einer Fasern enthaltenden Wärmeisolationsschicht eines Backofens nach einem der vorhergehenden Ansprüche, **dadurch gekennzeichnet,** daß das anorganische Material auf die Wärmeisolationsschicht (3, 15) aufgesprüht wird.

Fig.1

Fig.2